# EUROPÄISCHE PATENTSCHRIFT

(11) **EP 2 485 486 B1**
(45) Veröffentlichungstag und Bekanntmachung des Hinweises auf die Patenterteilung: **21.06.2017**
(21) Anmeldenummer: 12000267.0
(22) Anmeldetag: 17.01.2012
(51) Int. Cl.: H04N 7/18

(54) **Türstation eines Haus-Kommunikationssystems mit mindestens einer Wohnungsstation**
Door station of a building communication system with at least one residence station
Station de porte d'un système de communication domestique dotée d'au moins une station d'habitation

(30) Priorität: 05.02.2011 DE 102011010467
(43) Veröffentlichungstag der Anmeldung: 08.08.2012
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(56) Entgegenhaltungen:
- EP-A2- 1 848 216
- EP-A2- 1 973 352
- WO-A1-2007/060014
- DE-U1-202004 015 612

## Beschreibung

Die Erfindung betrifft eine Türstation eines Haus-Kommunikationssystems mit mindestens einer Wohnungsstation, wobei die Türstation eine Kamera aufweist und das von der Kamera aktuell erfasste Bild auf dem Display der mindestens einen Wohnungsstation zur Anzeige gebracht wird.

Aus der DE 20 2007 018 516 U1 ist ein Türzugangssystem mit einer eine Kamera und eine Türklingel aufweisenden Türstation und mindestens einer Wohnungsstation bekannt,
- wobei die Kamera eine vor der Türstation sich befindende Person erfasst und ein entsprechendes Bild an eine Bildvergleichseinrichtung der Wohnungsstation weiterleitet,
- wobei die Wohnungsstation einen Referenzspeicher aufweist, in welchem Referenzbilder unterschiedlicher Personen hinterlegt sind,
- wobei die Wohnungsstation einen Speicher aufweist, in welchem unterschiedliche Rufsequenzen hinterlegt sind,
- wobei den unterschiedlichen Referenzbildern unterschiedliche Rufsequenzen zugeordnet sind,
- wobei die Bildvergleichseinrichtung bei Betätigung der Türklingel eine Koinzidenzauswertung hinsichtlich der Bildsignale der Kamera und der Bildsignale des Referenzspeichers durchführt,
- wobei die Bildvergleichseinrichtung den Speicher in Abhängigkeit des Ergebnisses der Koinzidenzauswertung beaufschlagt und
- wobei eine Ansteuereinheit des Speichers einen Tonerzeuger mit der dem Referenzbild zugeordneten Rufsequenz beaufschlägt.

Hierdurch ist es möglich, Familienmitgliedern und fremden Personen unterschiedliche Rufsequenzen oder unterschiedlichen Familienmitgliedern unterschiedliche Rufsequenzen zuzuordnen.

Aus der DE 10 2006 033 133 B3 ist eine Einrichtung zur Erfassung von Personen mittels einer Kamera, insbesondere Videotürsprechanlage bekannt, bei welcher die Wärmestrahlung innerhalb des Gesamt-Erfassungsbereiches der Kamera über mehrere als Thermokette oder Thermosäule oder Thermopile-Zeile oder Thermosensorarray oder Thermopile-Array ausgeführte Temperatursensoren detektiert wird und bei welcher aus dem Gesamt-Erfassungsbereich der Kamera ein begrenzter "gezoomter" Bildausschnitt abgeleitet wird, welcher dem Bereich der von den Temperatursensoren detektierten maximalen Wärmestrahlung folgt.

Hierdurch ist es möglich, dem Monitor der Wohnungsstation (Innenstation) nicht das den gesamten Erfassungsbereich der Kamera zeigende Gesamtbild zur Verfügung zu stellen, sondern den im Vergleich zum Gesamtbild vergrößerten Bildausschnitt, vorzugsweise mit dem Gesicht der zu erfassenden Person, d. h. den Bereich der maximalen Wärmestrahlung vor der Kamera.

Eine integrierte Kamera der Türstation muss auf die vor der Tür befindlichen Gegebenheiten ausgerichtet werden, um ein optimales Erkennungsfeld zu gewährleisten. Um die Kamera auszurichten, muss das aufgenommene Bild überwacht werden. In der Regel erfolgt dies derart, dass eine erste Service-Person in der nächstgelegenen Wohnungsstation das aufgenommene und dort zur Anzeige gebrachte Bild beobachtet, während eine zweite Service-Person die Einstellung der Kamera vornimmt. Dabei ist es nachteilig, dass für dieses Einrichten zwei Service-Personen notwendig sind.

Der Erfindung liegt die Aufgabe zugrunde, eine Türstation eines Haus-Kommunikationssystems mit mindestens einer Wohnungsstation anzugeben, bei welcher eine in der Türstation integrierte Kamera in möglichst einfacher Weise eingestellt werden kann.

Diese Aufgabe wird in Verbindung mit den Merkmalen des Oberbegriffes des Anspruchs 1 dadurch gelöst, dass die Türstation eine erste entfernbare Abdeckung aufweist, hinter welcher eine Kamera-Einstellvorrichtung angeordnet ist und dass die Türstation eine zweite entfernbare Abdeckung aufweist, hinter welcher eine Service-Schnittstelle mit Steckvorrichtung zum Anschluss einer Steckvorrichtung einer vorkonfektionierten Verbindungsleitung zu einer zusätzlichen Wohnungsstation angeordnet ist.

Dabei können erste und/oder zweite entfernbare Abdeckung(en) an der Frontseite, Rückseite oder alternativ an der Schmalseite der frontseitigen Abdeckung der Türstation angeordnet sein.

Die erste und die zweite entfernbare Abdeckung können auch zu einer einzigen entfernbaren Abdeckung zusammengefasst sein.

Die mit der Erfindungsmeldung erzielbaren Vorteile bestehen insbesondere darin, dass lediglich eine einzige Service-Person für die optimale Einstellung der in der Türstation integrierten Kamera erforderlich ist. Des Weiteren können weitere Funktionen des Haus-Kommunikationssystems über diese Service-Schnittstelle sofort getestet werden. Als zusätzliche Wohnungsstation kann auch eine der Wohnungsstationen des Haus-Kommunikationssystems herangezogen werden.

Die Erfindung wird nachstehend anhand der in der Zeichnung dargestellten Ausführungsbeispiele erläutert. Es zeigen:
- Fig. 1: eine mit einer zusätzlichen Wohnungsstation verbundene Türstation eines Hauskommunikationssystem,
- Fig. 2: ein aus einer Türstation und drei Wohnungsstationen gebildetes Hauskommunikationssystem.

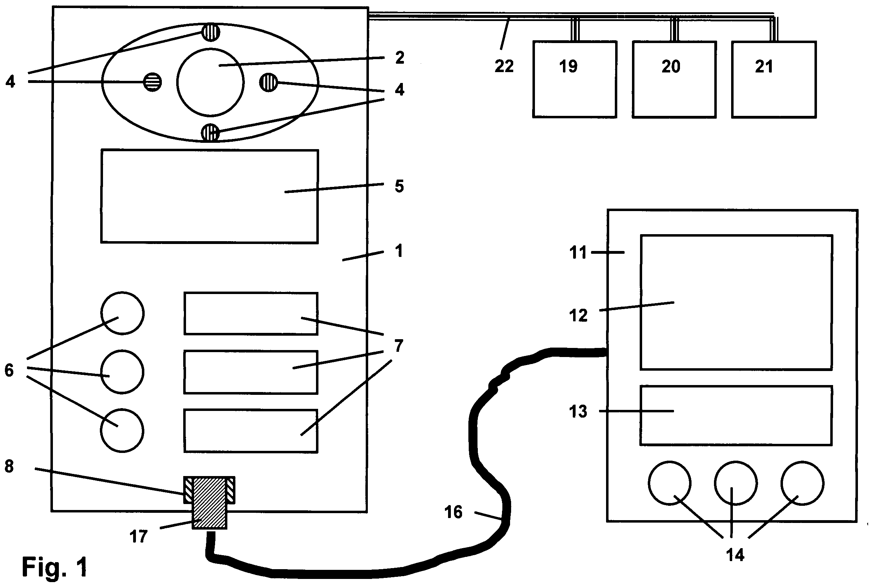

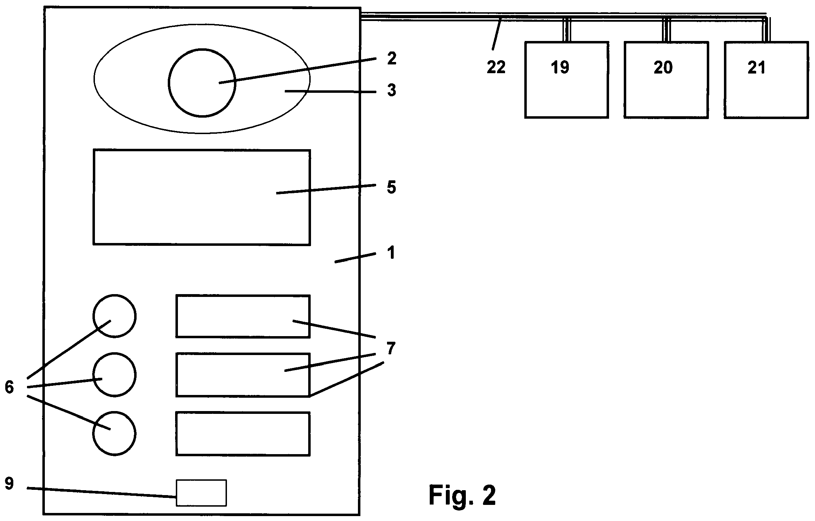

In Fig. 2 ist ein aus einer Türstation und drei Wohnungsstationen gebildetes Hauskommunikationssystem dargestellt. Das Haus-Kommunikationssystem weist eine Türstation 1 und drei Wohnungsstationen 19, 20, 21 auf, wobei diese vier Stationen über einen Bus 22 miteinander verbunden sind. Die Wohnungsstationen 19, 20, 21 weisen unter Anderem jeweils ein Display auf, welche das von der Kamera 2 erfasste Bild anzeigen. Die Türstation 1 weist eine Kamera 2, einen unter einer frontseitigen Abdeckung angeordneten Lautsprecher 5 sowie mehrere Klingelknöpfe 6 und Namensschilder 7 auf, deren Anzahl der Anzahl der angeschlossenen Wohnungsstationen entspricht. Die Kamera 2 ist von der Frontseite oder Rückseite her einstellbar, wobei die notwendigen Einstellelemente - siehe die Kamera-Einstellvorrichtung 4 in Fig. 1 - hinter einer ersten entfernbaren Abdeckung 3 verborgen sind. Ferner ist eine zweite entfernbare Abdeckung 9 vorhanden, hinter welcher eine Service-Schnittstelle - siehe Ziffer 8 in Fig. 1 - angeordnet ist.

In Fig. 1 ist eine mit einer zusätzlichen Wohnungsstation verbundene Türstation eines Hauskommunikationssystems dargestellt. Dabei ist die erste Abdeckung 3 entfernt, so dass die dahinter angeordnete Kamera-Einstellvorrichtung 4 zugänglich ist und von einer Service-Person unter Einsatz geeigneten Werkzeugs betätigt werden kann. Des Weiteren ist die zweite Abdeckung 9 entfernt, so dass die dahinter angeordnete Steckvorrichtung der Service-Schnittstelle 8 zugänglich ist. Die weitere Ausbildung der Türstation 2 sowie des Haus-Kommunikationssystems mit den drei Wohnungsstationen 19, 20, 21 entspricht der unter Fig. 2 gezeigten Konfiguration.

In die Steckvorrichtung der Service-Schnittstelle 8 ist die Steckvorrichtung 17 einer vorkonfektionierten Verbindungsleitung 16 eingesteckt, welche über ihr weiteres Ende mit einer zusätzlichen Wohnungsstation 11 verbunden ist. Diese Wohnungsstation 11 weist ein Display 12, ein unter einer frontseitigen Abdeckung angeordnetes Mikrofon 13 sowie Betätigungsknöpfe 14 auf, welche z. B. unter Anderem zur Ansteuerung eines Türöffners der Türstation 1 dienen. Die zusätzliche Wohnungsstation 11 kann, muss jedoch nicht, in ihrer Ausgestaltung einer der installierten Wohnungsstationen 19 - 21 entsprechen. Von Wichtigkeit ist lediglich, dass die zusätzliche Wohnungsstation 11 das Display 12 aufweist, welches das von der Kamera 2 aufgenommene Bild zur Anzeige bringt. Gegebenenfalls ist es auch möglich, eine der Wohnungsstationen 19, 20, 21 zeitweise und zum Zweck der Kamera-Einstellung als zusätzliche Wohnungsstation 11 einzusetzen.

Für die optimale Einstellung der Kamera 2 der Türstation 1 werden nun sukzessive folgende Maßnahmen abgearbeitet:
- Die Haus-Kommunikationsanlage wird installiert, zumindest wird die Türstation 1 installiert.
- Die Service-Person entfernt die erste Abdeckung 3 und die zweite Abdeckung 9 der Türstation 1.
- Die Service-Person schließt die zusätzliche Wohnungsstation 11 mittels der vorkonfektionierten Verbindungsleitung 16 an die Türstation 1 an.
- Die Service-Person versetzt die Haus-Kommunikationsanlage in den Einschalt-Zustand.
- Die Service-Person betrachtet das von der Kamera 2 der Türstation 1 aufgenommene und auf dem Display 12 der zusätzlichen Wohnungsstation 11 zur Anzeige gebrachte Bild.
- Die Service-Person betätigt die Kamera-Einstellvorrichtung 4 solange und in der Weise, bis er mit dem von der Kamera 2 aufgenommenen Bild zufrieden ist, d. h. bis die Kamera 2 auf die vor der Tür der Türstation befindlichen Gegebenheiten ausgerichtet ist, wodurch ein optimales Erkennungsfeld erreicht wird.
- Die Service-Person entfernt die Steckvorrichtung 17 aus der Steckvorrichtung der Service-Schnittstelle 8.
- Die Service-Person montiert die erste Abdeckung 3 und die zweite Abdeckung 9, so dass für den Normalbetrieb sowohl die Kamera-Einstellvorrichtung 4 als auch die Service-Schnittstelle 8 nicht zugänglich sind.

Selbstverständlich stellt die in den Figuren gezeigte Zugänglichkeit der Service-Schnittstelle 8 von der Frontseite her nur ein mögliches Ausführungsbeispiel dar und es sind auch andere Zugangs-Positionen realisierbar, z. B. von einer Schmalseite der frontseitigen Abdeckung der Türstation 1 her oder auch von der Rückseite.

Selbstverständlich können in einer alternativen Ausführungsform erste und zweite entfernbare Abdeckung 3 und 9 zu einer einzigen entfernbaren Abdeckung zusammengefasst sein, unter welcher sowohl die Kamera-Einstellvorrichtung 4 als auch die Service-Schnittstelle 8 angeordnet sind.

### Bezugszeichenliste

- 1: Türstation
- 2: Kamera
- 3: entfernbare Abdeckung
- 4: Kamera-Einstellvorrichtung
- 5: Lautsprecher unter Abdeckung
- 6: Klingelknöpfe
- 7: Namensschilder
- 8: Service-Schnittstelle mit Steckvorrichtung
- 9: entfernbarer Abdeckung
- 10: -
- 11: Wohnungsstation
- 12: Display
- 13: Mikrofon unter Abdeckung
- 14: Betätigungsknöpfe (z. B. für Türöffner)
- 15: -
- 16: vorkonfektionierte Verbindungsleitung
- 17: Steckvorrichtung
- 18: -
- 19: Wohnungsstation
- 20: Wohnungsstation
- 21: Wohnungsstation
- 22: Bus

## Patentansprüche

1. Türstation (1) eines Haus-Kommunikationssystems mit mindestens einer Wohnungsstation (19, 20, 21), wobei die Türstation (1) und die mindestens eine Wohnungsstation (19, 20, 21) über einen Bus (22) miteinander verbunden sind und die Türstation (1) eine Kamera (2) aufweist und das von der Kamera (2) aktuell erfasste Bild auf dem Display der mindestens einen Wohnungsstation (19, 20, 21) zur Anzeige gebracht wird, **dadurch gekennzeichnet, dass** die Türstation (1) eine erste entfernbare Abdeckung (3) aufweist, hinter welcher eine Kamera-Einstellvorrichtung (4) angeordnet ist und dass die Türstation (1) eine zweite entfernbare Abdeckung (9) aufweist, hinter welcher eine Service-Schnittstelle (8) mit Steckvorrichtung zum Anschluss einer Steckvorrichtung (17) einer vorkonfektionierten Verbindungsleitung (16) zu einer zusätzlichen Wohnungsstation (11) angeordnet ist.

2. Türstation nach Anspruch 1, **dadurch gekennzeichnet, dass** erste und/oder zweite entfernbare Abdeckung(en) (3, 9) an der Frontseite der frontseitigen Abdeckung der Türstation (1) angeordnet sind.

3. Türstation nach Anspruch 1, **dadurch gekennzeichnet, dass** erste und/oder zweite entfernbare Abdeckung(en) (3, 9) an der Schmalseite der frontseitigen Abdeckung der Türstation (1) angeordnet sind.

4. Türstation nach Anspruch 1, **dadurch gekennzeichnet, dass** erste und/oder zweite entfernbare Abdeckung(en) (3, 9) an der Rückseite der frontseitigen Abdeckung der Türstation (1) angeordnet sind.

5. Türstation nach einem der vorstehenden Ansprüche, **dadurch gekennzeichnet, dass** erste und zweite entfernbare Abdeckung(en) (3, 9) zu einer einzigen entfernbaren Abdeckung zusammengefasst sind.

## Claims

1. Door station (1) of a home communication system having at least one residence station (19, 20, 21), the door station (1) and the at least one residence station (19, 20, 21) being connected to one another via a bus (22) and the door station (1) having a camera (2) and the image currently captured by the camera (2) being displayed on the display of the at least one residence station (19, 20, 21), **characterized in that** the door station (1) has a first removable cover (3) behind which a camera adjusting apparatus (4) is arranged, and **in that** the door station (1) has a second removable cover (9) behind which a service interface (8) having a plug-in apparatus for connecting a plug-in apparatus (17) of a prefabricated connecting line (16) to an additional residence station (11) is arranged.

2. Door station according to Claim 1, **characterized in that** the first and/or second removable cover(s) (3, 9) is/are arranged on the front of the front cover of the door station (1).

3. Door station according to Claim 1, **characterized in that** the first and/or second removable cover(s) (3, 9) is/are arranged on the narrow side of the front cover of the door station (1).

4. Door station according to Claim 1, **characterized in that** the first and/or second removable cover(s) (3, 9) is/are arranged on the rear of the front cover of the door station (1).

5. Door station according to one of the preceding claims, **characterized in that** the first and second removable cover(s) (3, 9) are combined to form a single removable cover.

## Revendications

1. Station de porte (1) d'un système de communication domestique comportant au moins une station d'habitation (19, 20, 21), dans lequel la station de porte (1) et l'au moins une station d'habitation (19, 20, 21) sont connectées l'une à l'autre par l'intermédiaire d'un bus (22) et la station de porte (1) comporte une caméra (2) et l'image actuelle détectée par la caméra (2) est amenée à être affichée sur le dispositif d'affichage de l'au moins une station d'habitation (19, 20, 21), **caractérisé en ce que** la station de porte (1) comporte un premier capot (3) amovible à l'arrière duquel est disposé un dispositif de réglage de caméra (4) et **en ce que** la station de porte (1) comporte un deuxième capot (9) amovible à l'arrière duquel est disposée une interface de service (8) à dispositif enfichable pour connecter un dispositif enfichable (17) d'une ligne de connexion (16) préalablement confectionnée à une station d'habitation (11) supplémentaire.

2. Station de porte selon la revendication 1, **caractérisé en ce que** le premier et/ou le deuxième capot (s) amovible(s) (3, 9) est/sont disposé (s) sur la face avant du capot avant de la station de porte (1).

3. Station de porte selon la revendication 1, **caractérisé en ce que** le premier et/ou le deuxième capot (s) amovible(s) (3, 9) est/sont disposé (s) sur la face étroite du capot avant de la station de porte (1).

4. Station de porte selon la revendication 1, **caractérisé en ce que** le premier et/ou le deuxième capot(s) amovible(s) (3, 9) est/sont disposé(s) sur la face arrière du capot avant de la station de porte (1).

5. Station de porte selon la revendication 1, **caractérisé en ce que** les premier et deuxième capots amovibles (3, 9) sont assemblés pour former un capot amovible unique.
